**Europäisches Patentamt**

**European Patent Office**

**Office européen des brevets**

(19)

(11) Veröffentlichungsnummer: **0 234 533**
**A1**

(12) # EUROPÄISCHE PATENTANMELDUNG

(21) Anmeldenummer: **87102473.3**

(22) Anmeldetag: **20.02.87**

(51) Int. Cl.⁴: **A01C 7/00 , A01C 1/04**

(30) Priorität: **22.02.86 DE 3605813**

(43) Veröffentlichungstag der Anmeldung:
**02.09.87 Patentblatt 87/36**

(84) Benannte Vertragsstaaten:
**AT BE CH DE FR GB IT LI LU NL SE**

(71) Anmelder: **Zimmer, Uwe-Berend**
**Tidofeld 23**
**D-2980 Norden 1(DE)**

(72) Erfinder: **Zimmer, Uwe-Berend**
**Tidofeld 23**
**D-2980 Norden 1(DE)**

(74) Vertreter: **Jabbusch, Wolfgang, Dr.**
**Elisabethstrasse 6**
**D-2900 Oldenburg(DE)**

(54) **Verfahren und Vorrichtung zum Säen von leichtem und/oder feinem Saatgut.**

(57) Zum Einzelkornsäen von leichtem und/oder feinem Saatgut wird eine Mischung aus fließfähigem Material und Samenkörnern hergestellt und die Mischung in dosierten Teilmengen auf einem Saatbett vorzugsweise tropfenweise verteilt. Als fließfähiges Material wird eine zähflüssige Flüssigkeit verwendet, der eine vorbestimmte Menge Samenkörner je Volumeneinheit zugesetzt wird. Die Viskosität der Flüssigkeit ist dem Gewicht der einzumischenden Samenkörner anpaßbar. Ein flaschenartiger Behälter, dessen ausflußseitiger Öffnung ein Tropfenspender zugeordnet ist, kann als Vorrichtung benutzt werden, um die dosierten Teilmengen, vorzugsweise als Tropfen auszubringen.

Fig 1

EP 0 234 533 A1

## Verfahren und Vorrichtung zum Säen von leichtem und/oder feinem Saatgut

Die Erfindung betrifft ein Verfahren zum Säen, vorzugsweise im Erwerbsgartenbau, insbesondere zum Einzelkorn-Säen von leichtem und/oder feinem Saatgut.

In Landwirtschaft, Forstwirtschaft und Erwerbsgartenbau werden größere Pflanzenmengen durch generative Vermehrung erzeugt. Die Pflanzensamen werden auf einem Saatbett verteilt. Größere Samenkörner können maschinell mit geeigneten Vorrichtungen ausgebracht werden. Nach dem Aufgehen der Samenkörner werden zu dicht nebeneinanderstehende Jungpflanzen verzogen. Um das arbeitsintensive Auseinanderziehen (Pikieren) der Jungpflanzen zu vermeiden, ist es üblich, die Samenkörner einzeln auszusäen und dabei bereits einen vorbestimmten Abstand zwischen den Samenkörnern einzuhalten. Für größere Samenkörner sind sogenannte Einzelkorn-Sävorrichtungen bekannt.

Bei der Aussaat von feinem oder leichtem Saatgut ist die Einzelkorn-Aussäung jedoch problematisch und oftmals nicht zu verwirklichen. Auch Dosierung und ausreichende Breitensträuung von feinem und/oder leichtem Saatgut ist problematisch, so daß immer wieder manuelle "Pikierarbeit" zwecks Vereinzelung der angewachsenen Jungpflanzen erforderlich ist. Die Pikierarbeit ist insbesondere für den Erwerbsgartenbau sehr arbeits-und ko stenintensiv und führt außerdem zu einer unerwünschten Wachstumsstörung bei den Jungpflanzen, da beim Vereinzeln, bzw. "Pikieren" die Wurzel-und Sproßteile beschädigt werden.

Der Erfindung liegt die Aufgabe zugrunde, ein Verfahren zum Säen derart weiterzubilden, daß insbesondere feine und/oder leichte Samenkörner möglichst schnell und präzise zu ein, zwei oder mehreren Körnern in vorbestimmten Abständen auf dem Saatbett abgelegt werden können und eine Vorrichtung zur Durchführung des Verfahrens zu - schaffen.

Das zur Lösung dieser Aufgabe gefundene Verfahren zum Säen zeichnet sich dadurch aus, daß eine Mischung aus fließfähigem Material und Samenkörnern hergestellt wird und daß die Mischung in dosierten Teilmengen auf einem Saatbett verteilt wird.

In der Mischung aus fließfähigem Material und Samenkörnern sind die Samenkörner, insbesondere feine und/oder leichte Samenkörner, bereits vereinzelt, so daß in einer dosierten Teilmenge dieser Mischung auch eine vorbestimmbare Anzahl von Samenkörnern, wenigstens ein Samenkorn, enthalten ist. Die Teilmengen können auf einem Saatbett verteilt werden. Im Erwerbsgartenbau sind Kulturgefäße üblich, in die ein Erdsubstrat eingefüllt ist. Auf das Erdsubstrat in jedem Kulturgefäß kann eine dosierte Teilmenge der Mischung abgelegt werden. Das fließfähige Material heftet insbesondere feine und/oder leichte Samenkörner an die Oberfläche des Saatbetts bzw. des Erdsubstrats in einem Kulturgefäß. Insbesondere bei der Freilandaussaat werden dadurch Verwehungen leichter und feiner Samenkörner vermieden. Jede Jungpflanze wächst an dem ihr zugeordneten Ort heran.

Die dosierten Teilmengen können z.B. auch als Strang ausgebracht werden. In einem Strang können die einzelnen Samenkörner in Reihe hintereinanderliegen. Vorzugsweise wird die Mi schung jedoch tropfenweise auf einem Saatbett verteilt. Jeder Tropfen enthält wenigstens ein Samenkorn, das somit schnell und präzise auf dem Erdsubstrat in je einem Kulturgefäß ablegbar ist.

Mit besonderem Vorteil wird als fließfähiges Material eine zähflüssige Flüssigkeit verwendet, der eine vorbestimmte Menge Samenkörner je Volumeneinheit zugesetzt wird. Durch die Zähflüssigkeit wird die Vereinzelung der Samenkörner in der Mischung soweit verbessert, daß die einzelnen Samenkörner praktisch in der zähflüssigen Flüssigkeit schweben. Je nach Anzahl der Samenkörner je Volumeneinheit befinden sich in einem Tropfen der zähflüssigen Flüssigkeit dann ein, zwei oder mehr Samenkörner.

Die Viskosität der Flüssigkeit wird mit Vorteil dem Gewicht der einzumischenden Samenkörner angepaßt. Dies kann z.B. durch Zumischung von Verdickungsmitteln erfolgen. Es ist, z.B. durch Versuche feststellbar, welche Viskosität den auszubringenden Samenkörnern zuzuordnen ist. Für jede Samenart kann die passende Trägerflüssigkeit bereit gestellt werden. Auch größere Samenkörner lassen sich ohne weiteres in der Mischung freischwebend halten, wenn die Viskosität beispielsweise bis zur puddingartigen Konsistenz erhöht wird. Das erfindungsgemäße Verfahren ist deshalb nicht nur für besonders feine und leichte Samenkörner geeignet, sondern kann beispielsweise auch zur Einzelkornsäung von Samenkörnern jeglicher Art, Größe und Form benutzt werden.

Die zähflüssige Flüssigkeit wird mit besonderem Vorteil aus einem wasserlöslichen Kohlenhydrat und Wasser in einem der angestrebten Viskosität entsprechenden Mischungsverhältnis angemischt. Das wasserlösliche Kohlenhydrat kann z.B. in Pulverform vorliegen. Die zähflüssige Flüssigkeit ist umweltfreundlich und das in der Flüssigkeit enthaltene Wasser hat den Vorteil, daß das Samenkorn bereits bei der Aussaat mit der zum Aufgehen des Samenkorns notwendigen Flüssigkeit versorgt ist.

Es kann sich dadurch der Arbeitsgang des Angießens nach der Aussaat erübrigen. Bei längerer Lagerung der fertigen Mischung, kann auch ein oftmals vorteilhaftes Aufquellen der Samen erfolgen. Das verwendbare Kohlenhydrat kann beispielsweise ein Zucker der Formel $C_6H_{12}O_6$ sein, der mit Wasser zu einer honigartigen, - schwachfließenden, geleeartigen Lösung angesetzt wird. Dieser Lösung werden die Samenkörner zugesetzt und möglichst homogen darin verteilt, so daß sie einzeln in der Lösung frei schweben. Bei richtiger Viskosität der Flüssigkeit wird eine Entmischung nicht stattfinden. Leichte Samenarten können nicht aufsteigen und schwere Samenarten können entsprechend der gewählten Viskosität nicht absinken.

Zur Durchführung des Aussäverfahrens ist vorgesehen, daß eine vorbestimmte Menge Samenkörner in ein Gefäß eingefüllt wird, daß danach das Gefäß mit der Flüssigkeit aufgefüllt wird, daß Samenkörner und Flüssigkeit innig und gleichmäßig miteinander vermischt werden und daß die Mischung anschließend in den dosierten Teilmengen auf das Saatbett gebracht wird.

Das erfindungsgemäße Verfahren hat weiterhin den Vorteil, daß der Mischung aus fließfähigem Material und Samenkörnern auch bakterizide-und/oder fungizide Mittel zugesetzt werden können. Weiterhin können der Mischung aus fließfähigem Material und Samenkörnern auch Pflanzennährstoffe zugesetzt werden, die das Nahrungsangebot für die keimende Jungpflanze gerade im kritischen Übergangsstadium der ersten Wurzelbildung verbessern. Durch die Zusätze von bakteriziden-und/oder fungiziden Mitteln werden Verluste bei der zu erzielenden Pflanzenproduktion vermieden bzw. vermindert.

Eine zur Durchführung des Verfahrens geschaffene Vorrichtung zeichnet sich aus durch einen flaschenartigen Behälter, dessen ausflußseitiger Öffnung ein Tropfenspender zugeordnet ist. In den flaschenartigen Behälter kann die Mischung aus Samenkör nern und Flüssigkeit eingefüllt werden. Die Mischung kann jedoch auch in dem Behälter hergestellt werden. Als Tropfenspender kommt jede geeignete Einrichtung in Frage. Die Tropfen können beispielsweise mechanisch erzeugt werden durch entsprechende Dosierapparate. Damit die Vorrichtung zur Durchführung des Verfahrens jedoch möglichst einfach und damit kostengünstig ist, ist vorgesehen, daß der Tropfenspender als an die Öffnung des Behälters ansetzbares Rohr ausgebildet ist, dessen freies Ende eine den freien Rohrquerschnitt verengende Düse aufweist. Aus dem Behälter ausfließende Mischung bildet bei Durchtritt durch die Düse einen Tropfen, in dem wenigstens ein Samenkorn enthalten ist. Selbstverständlich muß die Düse solche Abmessungen aufweisen, daß ein Samenkorn durchpaßt.

Die Tropfen können dadurch erzeugt werden, daß geeignete Mittel vorgesehen sind, um die Mischung portionsweise aus dem Behälter herauszudrücken, so daß sie aus der Düse als Tropfen austritt.

Eine einfache Maßnahme zum Herausdrücken der Mischung aus dem Behälter sieht vor, daß der Behälter also Kunststofflasche mit flexiblen Wandungen ausgebildet ist. Mit einem derartigen als Kunststofflasche ausgebildeten Behälter, an dem der einfache, als Rohr mit Düse ausgebildete Tropfenspender ansetzbar ist, läßt sich manuell schnell und einfach eine Einzelkornsäung durch Ausbringen der Tropfen der Mischung erreichen.

Eine verbesserte Ausführung der Vorrichtung zur Durchführung des Verfahrens, mit der sehr präzise gearbeitet werden kann, sieht vor, daß der Behälter einen Anschluß für ein Druckgas aufweist und daß in einer das Druckgas zuführenden Leitung ein betätigbares Druckgas-Dosierventil eingesetzt ist. In den die Mischung aus Flüssigkeit und Samenkörnern enthaltenden Behälter wird das Druckgas in dosierter Menge eingeführt, so daß sich, durch Verdrängung, an der Austrittsöffnung des Behälters entsprechende Tropfen bilden und zwar jedesmal dann, wenn das Druckgas-Dosierventil betätigt wird.

Das Dosierventil kann in ein also Handgriff ausgebildetes Gehäuse eingesetzt sein, das ein Betätigungsorgan für das Dosierventil und das einen Druckgasspeicher aufweist sowie mindestens ein Halterungsorgan für einen auswechselbar daran gehaltenen Behälter und das wenigstens einen Tropfenspender hat. Sobald der Behälter in das Halterungsorgan eingesetzt ist, kann die Vorrichtung von Hand über das Saatbett, über Kulturgefäße oder dergleichen geführt werden, wobei, jeweils bei manueller Betätigung des Dosierventils, ein Tropfen aus dem Behälter herausgedrückt und auf dem Saatbett oder dem Kulturgefäß abgelegt wird.

Selbstverständlich können auch mehrere Behälter an dem als Handgriff ausgebildeten Gehäuse angebracht werden, so daß sich mehrere Tropfen und damit mehrere einzelne Samenkörner gleichzeitig ausbringen lassen, sobald das Dosierventil betätigt wird. Dabei können in die Behälter auch verschiedenartige Mischungen eingefüllt werden, so daß sich beispielsweise Pflanzenkulturen heranzüchten lassen, bei denen unterschiedliche Pflanzen in Reihen nebeneinander wachsen und sich dadurch bekanntermaßen gegenseitig begünstigen können.

Jedes Halterungsorgan für einen Behälter weist einen in den Behälter weiterführenden Druckgasanschluß auf, so daß die Einleitung von Druckgas in den Behälter möglich ist, sobald der Behälter mit der Mischung aus Flüssigkeit und Samenkörnern mit dem Halterungsorgan verbunden ist.

Der Druckgasspeicher ist mit Vorteil eine an sich bekannte auswechselbare Druckgaspatrone, beispielsweise eine $CO_2$-Patrone. Für manuell über das Saatbett führbare Handgeräte bietet sich die Verwendung einer auch für Haushaltsgeräte üblichen kleinen $CO_2$-Patrone an.

An dem Gehäuse kann wenigstens ein Tropfenspender angeordnet sein, der mit dem Halterungsorgan für mindestens einen der Behälter über einen zugehörigen Verbindungskanal verbunden ist. Dies erlaubt beliebige Kombinationen von Behältern, z.B. auch mit verschiedenen Mischungen, die über einen Tropfenspender ausgebracht werden. Selbstverständlich kann auch jedem Behälter an dem Gehäuse ein eigener Tropfenspender zugeordnet werden. Mehrere kleinere Behälter können auch durch einen größeren Behälter ersetzt werden. Dies ist letztlich eine Frage des zu handhabenden Gewichts, für den Fall, daß die Vorrichtung zur Ausbringung der die Samenkörner enthaltenden Tropfen von Hand über das Saatbett, über Kulturgefäße oder dergleichen geführt wird.

Mit besonderem Vorteil läßt sich eine einfache Sävorrichtung auch maschinell steuern. Kulturgefäße mit Erdsubstrat können z.B. auf Paletten aufgestellt werden, wobei diese Paletten mit einem Förderband oder dergleichen unter dem Arbeitsbereich einer an einem Auslegerarm einer Maschine gehaltenen Vorrichtung mit Tropfenspender und Behälter für die Mischung vorbeigeführt werden. Beispielsweise kann das Dosierventil für den Tropfenspender ein Magnetventil sein, das entsprechend elektronisch gesteuert wird, so daß die Tropfen einzeln auf jedem Kulturgefäß, das unter der Vorrichtung vom Förderband vorbeigeführt wird, abgelegt werden. Selbstverständlich können auch mehrere Tropfenspender eine Reihe von Kulturgefäßen gleichzeitig bedienen.

Das erfindungsgemäße Verfahren bringt in Verbindung mit der zur Durchführung des Verfahrens gefundenen einfachen Vorrichtung Arbeitszeiteinsparungen und erübrigt insbesondere das arbeitsintensive Vereinzeln der heranwachsenden Jungpflanzen. Wachstumsstörungen an der Jungpflanze, die durch das Vereinzeln bedingt sind, können dadurch nicht mehr auftreten. Daraus ergibt sich auch eine Verkürzung der Kulturzeit, wodurch sich Produktionskosten für die Pflanzenanzucht senken lassen.

Im Hobbygärtnerbereich werden feine Gemüsesaaten und Sommerblu mensaaten bisher sehr grob im Rillenverfahren ausgesät. Durch das erfindungsgemäße Verfahren wird eine Vereinzelung der Samenkörner bewirkt, so daß sich ein späteres Vereinzeln der Jungpflanzen erübrigt. Dadurch wird Zeit eingespart und der Ertrag durch Kulturzeitverkürzung gesteigert.

Zahlreiche Samenarten benötigen wechselnde Keimbedingungen. Beispielsweise sind die Samen zunächst niedrigen Temperaturen etwa um den Gefrierpunkt auszusetzen und danach werden höhere Temperaturen im Bereich von etwa 20° C über einen Zeitraum von etwa 10 bis 30 Tagen, jeweils abhängig von der Samenart, notwendig. Derartig wechselnde Keimbedingungen sind relativ schwierig zu realisieren, insbesondere im Erwerbsgartenbau, wo beispielsweise in mit Erdsubstrat gefüllten Kulturgefäßen ausgesät und angezüchtet wird.

Das erfindungsgemäße Verfahren ermöglicht nunmehr die mit der Mischung aus Samenkörnern und Flüssigkeit gefüllten Behälter den genannten unterschiedlichen Temperaturphasen im normalen Kühlschrank auszusetzen, danach beispielsweise in einem Brutschrank zu geben und erst kurz vor der Keimung auszusäen. Wechselnde Keimbedingungen lassen sich mit den die Mischung aus Samenkörnern und Flüssigkeit enthaltenden Behältern wesentlich einfacher realisieren, als es beispielsweise mit Kulturgefäßen der Fall ist. Transporte der Kulturgefäße vom Gewächshaus ins Freiland, um sie dort einer Frosteinwirkung auszusetzen, und zurück ins beheizte Gewächshaus entfallen. Temperaturen im Kühlschrank sind regelbar und gleichbleibend, wodurch der Keimerfolg größer wird.

Das erfindungsgemäße Verfahren läßt sich mit einfachen Geräten durchführen, so daß sich gegenüber herkömmlichen Aussaatverfahren im Hinblick auf Personalkostenersparnis, Heizkostenersparnis und Kulturverbesserung bei der gewerblichen Pflanzenanzucht erhebliche Vorteile ergeben. Auch die Anwendung im Hobbygärtnerbereich ist problemlos, einfach und kostengünstig und ergibt Ertragssteigerungen und Zeitersparnis. Selbstverständlich sind auch großflächige Anwendungsbereiche in der Forst-und Landwirtschaft, beispielsweise beim Gemüseanbau und bei der Nutzpflanzenproduktion denkbar. Das erfindungsgemäße Verfahren ist auch anwendbar in Verbindung mit einfachen Maschinen, beispielsweise auch Feldsaatmaschinen, die Saatgut präzise punktförmig in den Ackerboden bringen können.

Ausführungsbeispiele einer Vorrichtung zur Durchführung des Verfahrens sind schematisch in den Zeichnungen dargestellt. Es zeigen:

Fig. 1 eine Seitenansicht eines einfachen Behälters, der für die manuelle Durchführung des Verfahrens geeignet ist,

Fig. 2 eine schematische Seitenansicht einer anderen Ausführung einer Vorrichtung zur manuellen Durchführung des Verfahrens und

Fig. 3 eine schematische Seitenansicht einer automatisch arbeitenden Vorrichtung zur Durchführung des Verfahrens.

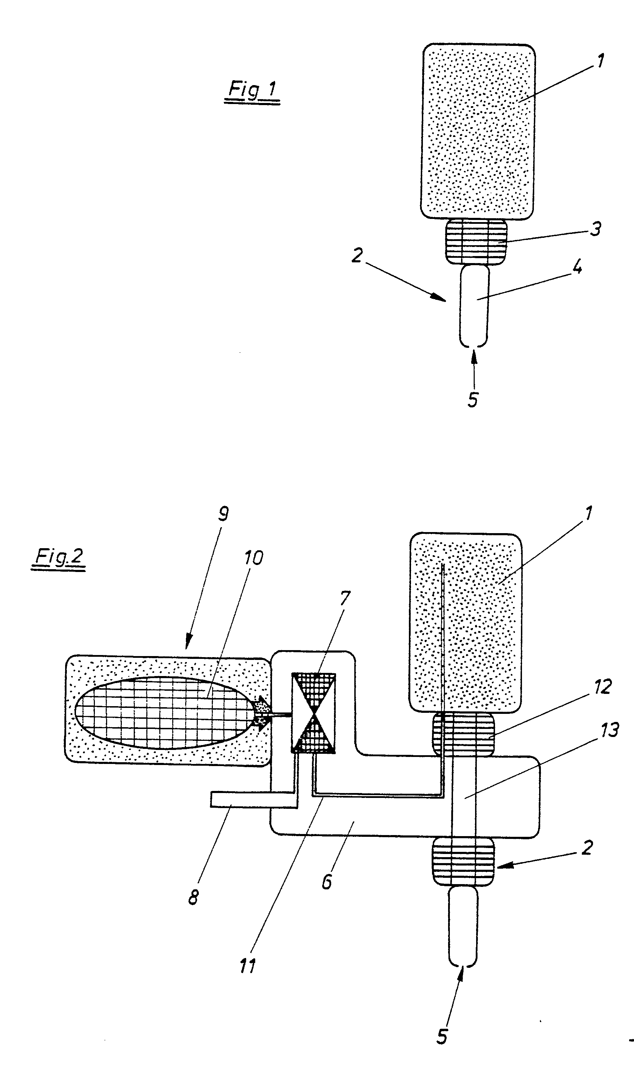

Fig. 1 zeigt einen einfachen Behälter 1 zur Aufnahme einer Mischung aus Samenkörnern und zähflüssiger Flüssigkeit. Der Behälter ist hier eine an sich bekannte Kunststofflasche mit flexiblen Wandungen. Für eine einfache Handaussaat wird das Saatgut in den Behälter gefüllt. Eine in ihrer Viskosität dem Saatgut angepaßte Flüssigkeit wird danach in den Behälter gegeben und der Behälter kann geschüttelt werden, bis eine gleichmäßige Verteilung der Samenkörner in der Flüssigkeit erreicht ist. Zur Aussaat wird der Behälter 1 mit seiner ausflußseitigen Öffnung nach unten gehalten. Die ausflußseitige Öffnung ist mit einem Tropfenspender 2 verschlossen, der hier aus einem Stutzen 3 besteht, der an die ausflußseitige Öffnung des Behälters 1 ansetzbar ist. Der Stutzen setzt sich in einem Rohr 4 fort, dessen freies Ende eine den Rohrquerschnitt verengende Düse 5 aufweist. Der Tropfenspender 2 ist somit ähnlich einer bekannten Pipette ausgebildet. Durch leichten Druck auf den Behälter 1 kann die Mischung aus dem Behälter herausgedrückt werden, bis aus der Düse 5 ein Tropfen austritt. In jedem Tropfen ist wenigstens ein Samenkorn enthalten, so daß die Tropfen einzeln in vorbestimmtem Abstand punktförmig auf dem Saatbett oder auf einzelne Kulturgefäße gebracht werden können. Ein Behälter mit einem Inhalt von etwa 50ml ergibt etwa 1100 Tropfen, so daß sich dementsprechend auch max. 1100 Jungpflanzen anzüchten lassen. Der Behälter kann mit Wasser gereinigt werden und ist somit mehrfach verwendbar.

In Fig. 2 ist eine andere Ausführung einer Vorrichtung schematisch dargestellt, mit der sich das manuelle Aussäen noch weiter präzisieren und beschleunigen läßt.

Ein Gehäuse 6 ist also Handgriff ausgebildet, in das ein Dosierventil 7 eingesetzt ist, welches mittels eines aus dem Gehäuse herausragenden, als Abzug ausgebildeten Betätigungsorgans 8 betätigbar ist. Das Gehäuse weist außerdem einen Druckspeicher 9 auf, der hier als auswechselbar am Gehäuse gehaltene $CO_2$-Gaspatrone 10 ausgebildet ist. Aus der Gaspatrone kann Druckgas dem Dosierventil 7 zugeführt werden. Das Druckgas wird bei Betätigung des Betätigungsorganes 8 in dosierter Menge über die Leitung 11 in den Behälter 1 geleitet. Selbstverständlich kann der Behälter 1 über einen entsprechenden Anschluß für die Leitung verfügen, der sicherstellt, daß die Leitung an den Behälter 1 angeschlossen ist, sobald der Behälter 1 mittels eines geeigneten Halterungsorgans 12 am Gehäuse 6 befestigt ist. Durch das Anschlußorgan 12 führt ein vom Behälter zum Tropfenspender 2 führender Verbindungskanal 13.

Bei Betätigung des Dosierventils wird eine vorbestimmte Menge Druckgas aus der $CO_2$-Gaspatrone 10 über die Leitung 11 in den Behälter 1 gedrückt. Dieses Druckgas verdrängt eine entsprechende Menge der im Behälter befindlichen Mischung aus zähflüssiger Flüssigkeit und Samenkörnern, die aus der Düse 5 am freien Ende des Tropfenspenders 2 als Tropfen austritt.

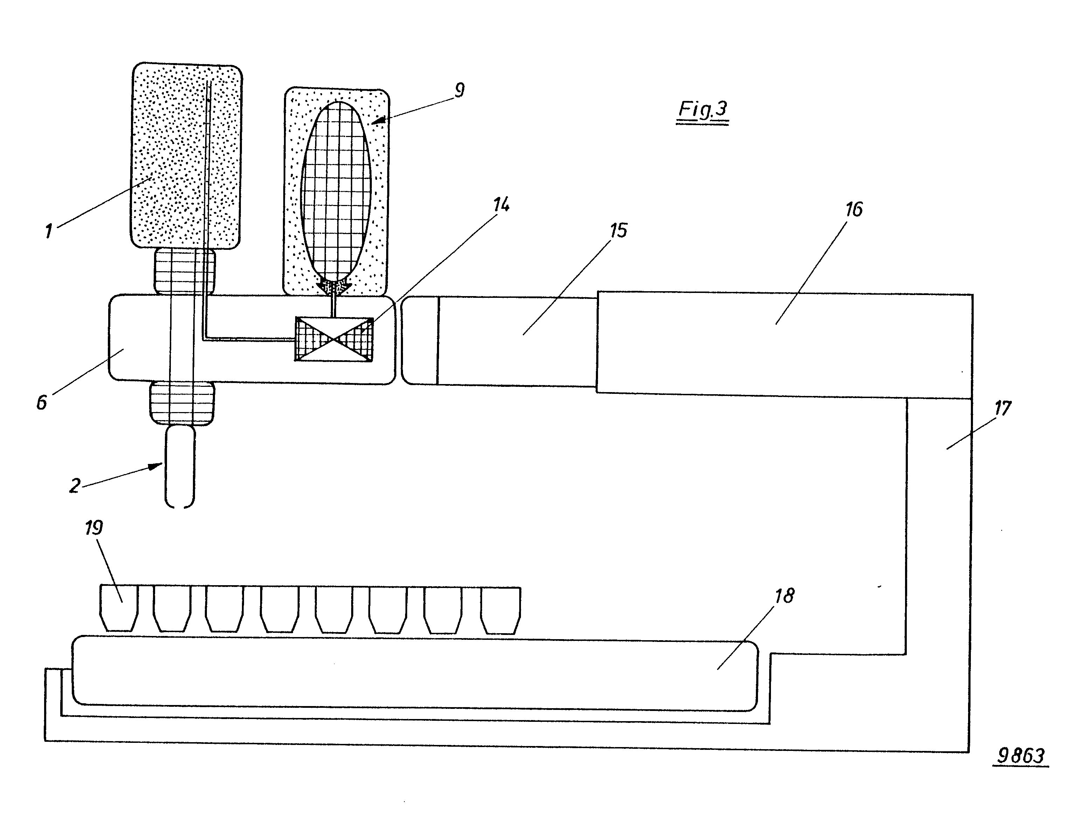

Fig. 3 zeigt eine weitere Ausgestaltung der Vorrichtung, die ähnlich der noch für die manuelle Ausbringung der Tropfen ausgebildete Vorrichtung gemäß Fig. 2 ausgebildet ist, jedoch mit dem Unterschied, daß das Dosierventil hier als Magnetventil 14 ausgebildet ist, so daß eine elektrische Betätigung mittels einer entsprechenden Maschinensteuerung möglich ist. Das Gehäuse 6 mit dem daran angesetzten Behälter 1 und dem Tropfenspender 2 sowie dem Druckgasspeicher 9, ist am freien Ende eines Auslegers 15 angeordnet, der teleskopartig aus dem Kopf 16 am Ständer 17 eines Maschinengestells ausschiebbar ist. Das Maschinengestell führt ein Förderband 18 quer zur Zeichnungsebene, auf dem Kulturgefäße, die mit Erdsubstrat gefüllt sind, in Reihen aufgestellt sind. Durch entsprechende automatische Bewegung und Betätigung der Vorrichtung kann ein Tropfen der im Behälter 1 befindlichen Mischung, und somit wenigstens ein Samenkorn, auf jedem Kulturgefäß 19 abgelegt werden, das mittels des Förderbandes 18 durch den Arbeitsbereich der Vorrichtung geführt wird.

## Ansprüche

1. Verfahren zum Säen, vorzugsweise im Erwerbsgartenbau, insbesondere zum Einzelkornsäen von leichtem und/oder feinem Saatgut, dadurch gekennzeichnet, daß eine Mischung aus fließfähigem Material und Samenkörnern hergestellt wird und daß die Mischung in dosierten Teilmengen auf einem Saatbett verteilt wird.

2. Verfahren nach Anspruch 1, dadurch gekennzeichnet, daß die Mischung tropfenweise auf einem Saatbett verteilt wird.

3. Verfahren nach einem der Ansprüche 1 und 2, dadurch gekennzeichnet, daß als fließfähiges Material eine zähflüssige Flüssigkeit verwendet wird, der eine vorbestimmte Menge Samenkörner je Volumeneinheit zugesetzt wird.

4. Verfahren nach Anspruch 3, dadurch gekennzeichnet, daß die Viskosität der Flüssigkeit dem Gewicht der einzumischenden Samenkörner angepaßt wird.

5. Verfahren nach Anspruch 4, dadurch gekennzeichnet, daß der Flüssigkeit ein Verdickungsmittel zugesetzt wird.

6. Verfahren nach Anspruch 4, dadurch gekennzeichnet, daß die Flüssigkeit aus einem wasserlöslichen Kohlenhydrat und Wasser in einem der angestrebten Viskosität entsprechenden Mischungsverhältnis angemischt wird.

7. Verfahren nach einem der vorhergehenden Ansprüche, dadurch gekennzeichnet, daß eine vorbestimmte Menge Samenkörner in ein Gefäß (1) eingefüllt wird, daß danach das Gefäß (1) mit der Flüssigkeit aufgefüllt wird, daß Samenkörner und Flüssigkeit innig und gleichmäßig miteinander vermischt werden, und daß die Mischung anschließend in den dosierten Teilmengen auf das Saatbett gebracht wird.

8. Verfahren nach einem der Ansprüche 1 bis 7, dadurch gekennzeichnet, daß der Mischung aus fließfähigem Material und Samenkörnern bakterizide-und/oder fungizide Mittel zugesetzt werden.

9. Verfahren nach einem der Ansprüche 1 bis 8, dadurch gekennzeichnet, daß der Mischung aus fließfähigem Material und Samenkörnern Pflanzennährstoffe zugesetzt werden.

10.Vorrichtung zur Durchführung des Verfahrens gemäß Anspruch 1 bis 8, gekennzeichnet durch einen flaschenartigen Behälter (1), dessen ausflußseitiger Öffnung ein Tropfenspender (2) zugeordnet ist.

11.Vorrichtung nach Anspruch 10, dadurch gekennzeichnet, daß der Tropfenspender (2) als an die Öffnung des Behälters (1) ansetzbares Rohr - (4) ausgebildet ist, dessen freies Ende eine den freien Rohrquerschnitt verengende Düse (5) aufweist.

12.Vorrichtung nach einem der Ansprüche 10 und 11, dadurch gekennzeichnet, daß der Behälter (1) eine Kunststofflasche mit flexiblen Wandungen ist.

13.Vorrichtung nach einem der Ansprüche 10 bis 12, dadurch gekennzeichnet, daß der Behälter - (1) einen Anschluß für ein Druckgas aufweist und daß in eine das Druckgas zuführende Leitung (11) ein betätigbares Druckgas-Dosierventil (7) eingesetzt ist.

14.Vorrichtung nach Anspruch 13, dadurch gekennzeichnet, daß das Dosierventil (7) in ein als Handgriff ausgebildetes Gehäuse (6) eingesetzt ist, das ein Betätigungsorgan (8) für das Dosierventil - (7) und das einen Druckgasspeicher (9) aufweist sowie mindestens ein Halterungsorgan (12) für einen auswechsel bar daran gehaltenen Behälter (1) hat und mit wenigstens einem Tropfenspender (2) versehen ist.

15.Vorrichtung nach Anspruch 14, dadurch gekennzeichnet, daß jedes Halterungsorgan (12) den in den Behälter (1) weiterführenden Anschluß für Druckgas aufweist.

16.Vorrichtung nach einem der Ansprüche 13 bis 15, dadurch gekennzeichnet, daß der Druckgasspeicher (9) eine auswechselbare Druckgaspatrone (10) ist.

17.Vorrichtung nach einem der Ansprüche 13 bis 16, dadurch gekennzeichnet, daß wenigstens ein Tropfenspender (2) an dem Gehäuse (6) angeordnet ist, der mit dem Halterungsorgan (12) für mindestens einen der Behälter (1) über einen zugehörigen Verbindungskanal (13) verbunden ist.

18.Vorrichtung nach einem der Ansprüche 13 und 14, dadurch gekennzeichnet, daß das Dosierventil ein Magnetventil (14) ist.

_Fig 1_

1

3

2

4

5

_Fig.2_

9

10

7

8

11

6

1

12

13

2

5

_9863_

Fig.3

9863

**Europäisches Patentamt**

**EUROPÄISCHER RECHERCHENBERICHT**

Nummer der Anmeldung

EP 87 10 2473

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 239 932 (VICTOR)<br><br>* Seite 1, Zeilen 31-40; Seiten 2,3 *<br><br>--- | 1,3,4,<br>5,6,8,<br>9 | A 01 C  7/00<br>A 01 C  1/04 |
| X | DE-B-1 813 080 (HÜLS)<br><br>* Spalte 2; Spalte 3 *<br><br>--- | 1,3,4,<br>5,6,7,<br>9 | |
| A | GB-A-2 149 457 (SHERWOOD)<br>* Seite 1: Abbildung 1 *<br><br>--- | 10,11 | |
| A | WO-A-7 901 067 (CURRAN)<br>* Seite 13, Zeilen 1,12 *<br><br>--- | 10,11 | |
| A | FR-A-2 383 696 (HERCULES POWDER)<br>* Seite 2, Zeilen 6-37 *<br><br>----- | 1,3,4,<br>5,6 | RECHERCHIERTE SACHGEBIETE (Int. Cl.4)<br><br>A 01 C<br>A 01 G |

Der vorliegende Recherchenbericht wurde für alle Patentansprüche erstellt.

| Recherchenort | Abschlußdatum der Recherche | Prüfer |
|---|---|---|
| DEN HAAG | 09-06-1987 | VERMANDER R.H. |